**Europäisches Patentamt**

**European Patent Office**

**Office européen des brevets**

(11) Veröffentlichungsnummer: **0 238 908**
**A1**

(12) **EUROPÄISCHE PATENTANMELDUNG**

(21) Anmeldenummer: **87103179.5**

(22) Anmeldetag: **06.03.87**

(51) Int. Cl.⁴: **H02K 55/04** , **F04B 37/02**

(30) Priorität: **19.03.86 DE 3609273**

(43) Veröffentlichungstag der Anmeldung:
**30.09.87 Patentblatt 87/40**

(84) Benannte Vertragsstaaten:
**CH DE FR GB LI**

(71) Anmelder: **Siemens Aktiengesellschaft Berlin
und München**
**Wittelsbacherplatz 2**
**D-8000 München 2(DE)**

(72) Erfinder: **Intichar, Lutz, Dr.**
**Max-Busch-Strasse 12**
**D-8520 Erlangen(DE)**
Erfinder: **Schmidt, Wolfgang, Dr.**
**Möhrendorfer Strasse 6**
**D-8520 Erlangen(DE)**
Erfinder: **Schnapper, christoph, Dr.**
**Lachnerstrasse 61**
**D-8520 Erlangen(DE)**
Erfinder: **Spiess, Karl-Heinz**
**Haagstrasse 37**
**D-4130 Moers 1(DE)**
Erfinder: **Weghaupt, Erich**
**Rathenaustrasse 10**
**D-4330 Mülheim/Ruhr(DE)**

(54) **Kryosorptionspumpe für ein thermisches Isoliervakuum im Läufer einer elektrischen Maschine mit supraleitender Erregerwicklung.**

(57) Die Kryosorptionspumpe ist für ein thermisches Isoliervakuum im Läufer einer elektrischen Maschine, insbesondere eines Turbogenerators, vorgesehen. Der Läufer weist eine supraleitende, von einem kryogenen Kühlmittel tiefzukühlende Erregerwicklung auf, der das Kühlmittel über mindestens eine entsprechende Leitung zuzuführen ist, wobei er an einer Stelle mit einem mitrotierenden Überleitungsteil für vakuumisolierte Kühlmittelleitungen versehen ist und seine zu evakuierenden Räume mit der an die Kühlmittelzuführungsleitung thermisch angekoppelten Kryosorptionspumpe direkt verbunden sind. Diese Kryosorptionspumpe soll verhältnismäßig einfach aufzubauen sein, ohne daß es besonderer Maßnahmen zur Ausgestaltung des Läufers bedarf. Hierzu ist die Kryosorptionspumpe (7 ; 7a, 7b) erfindungsgemäß in einem zentralen Vakuumraum (18) des Überleitungsteiles (4) längs dessen Rotationsachse (2) angeordnet und dort mit der mindestens einen Kühlmittelzuführungsleitung (11; 11a bis 11c) thermisch verbunden.

FIG 1A

FIG 1B

## Kryosorptionspumpe für ein thermisches Isoliervakuum im Läufer einer elektrischen Maschine mit supraleitender Erregerwicklung

Die Erfindung bezieht sich auf eine Kryosorptionspumpe für ein thermisches Isoliervakuum im Läufer einer elektrischen Maschine, insbesondere eines Turbogenerators, wobei der Läufer

-eine supraleitende, von einem kryogenen Kühlmittel tiefzukühlende Erregerwicklung aufweist, der das Kühlmittel über mindestens eine entsprechende Leitung zuzuführen ist,

-an einer Seite mit einem mitrotierenden Überleitungsteil für vakuumisolierte Kühlmittelleitungen versehen ist und

-dessen zu evakuierenden Räume mit der Kryosorptionspumpe direkt verbunden sind, welche an die Kühlmittelzuführungsleitung thermisch angekoppelt ist.

Eine solche Kryosorptionspumpe geht aus der DE-OS 28 06 576 hervor.

Die supraleitende Erregerwicklung des Läufers einer elektrischen Maschine, beispielsweise eines Turbogenerators, wird im allgemeinen mit flüssigem Helium gekühlt. Um eine Wärmeübertragung von außen auf diese tiefgekühlte Wicklung zu begrenzen, wird diese zweckmäßig von einem Isoliervakuum umgeben, das im allgemeinen kleiner als $10^{-5}$ mbar sein soll. Zwar werden wegen der Kühlung mit flüssigem Helium alle Gasbestandteile mit Ausnahme des Heliums aufgrund einer Kryopumpenwirkung an heliumkalten Oberflächenteilen des Läufers gebunden. Jedoch wird das Isoliervakuum durch Heliumlecks der heliumführenden Läuferteile, insbesondere an Löt-und Schweißverbindungen verschlechtert. Für die heliumführenden Teile der Maschine müßte bei einer Betriebszeit der Maschine von mehr als einem Jahr die Leckrate kleiner als $10^{-10}$ mbar • l/sec sein, wenn ein Abpumpen des Heliums aus dem Isoliervakuum nicht erforderlich sein soll. Jedoch sind nur mit einem sehr hohen technischen Aufwand bei der Werkstoffauswahl und bei der Fertigung derartig geringe Leckraten zu erreichen. Im allgemeinen liegen die Leckraten für die heliumführenden Teile bei etwa $10^{-8}$ mbar • l/sec. Bei einer langen Betriebszeit von mehreren Jahren, wie sie für Turbogeneratoren gefordert wird, ergibt sich dann ein unzulässiger Druckanstieg des Isoliervakuums. So steigt beispielsweise bei dieser Leckrate in einem Vakuumvolumen von 1000 l der Druck in weniger als einem Jahr auf $10^{-4}$ mbar an. Es wird somit eine Pumpe benötigt, die Helium über den genannten Zeitraum zuverlässig und weitgehend wartungsfrei abpumpen kann.

Wird hierfür eine externe Pumpe eingesetzt, so ist zum Anschluß an die rotierenden Vakuumräume des Läufers in einem sogenannten Anschlußkopf ein Übergang von feststehenden auf rotierende Teile einer Pumpleitung mit einer entsprechenden Vakuumdrehdurchführung in dem Anschlußkopf erforderlich. Die Pumpleitung erstreckt sich durch einen mitrotierendes Überleitungsteil hindurch, der in Form eines Wellenendstückes des Läufers in den Anschlußkopf hineinragt. Dieser auf der antriebsabgewandten Seite des Läufers befindliche Überleitungsteil dient insbesondere zur Aufnahme von vakuumisolierten Kühlmittelleitungen zwischen dem Anschlußkopf und dem eigentlichen Läufer- oder Wickelkörper (vgl. z.B. "Advances in Cryogenic Engineering", Vol. 23, 1978, Seiten 125 bis 129 und Seiten 132 bis 139). Die Abdichtung der Vakuumdrehdurchführung in dem Anschlußkopf kann insbesondere durch eine sogenannte Ferrofluiddichtung erfolgen (vgl. z.B. DE-OS 20 34 213). Hierbei besteht jedoch die Schwierigkeit, daß das Saugvermögen der Pumpe durch die Leitwerte der verhältnismäßig langen Verbindungsleitungen und durch die Vakuumdurchführung erheblich reduziert wird. Außerdem ist die mit Ferrofluid abgedichtete Vakuumdrehdurchführung sehr empfindlich, insbesondere gegen Wellenschwingungen, und damit eine mögliche Störquelle im Kraftwerksbetrieb.

Eine weitere Möglichkeit besteht im Einbau einer mitrotierenden Pumpe im Läufer, die keine mechanische Verbindung zur Umgebung besitzt. Hierbei entfällt also eine besondere Pumpleitung nach außen mit einer kritischen Vakuumdrehdurchführung. Eine solche Evakuierungsvorrichtung mit einer Ionisationsgetterpumpe ist aus der DE-PS 28 26 501 bekannt.

Zur Aufrechterhaltung eines thermisch isolierenden Vakuums im Läufer eines Turbogenerators mit supraleitender Erregerwicklung kann vorteilhaft auch eine Kryosorptionspumpe dienen, wie sie beispielsweise aus der eingangs genannten DE-OS zu entnehmen ist. Das entsprechende Pumpprinzip ist allgemein bekannt (vgl. z.B. M.Wutz: "Theorie und Praxis der Vakuumtechnik", Braunschweig 1965, insbesondere Seite 213 bis 222). Bei dem bekannten Generator ist diese Pumpe im aktiven Teil auf dem Wickelkörper des Läufers angeordnet und mittels Verbindungsöffnungen mit den Vakuumräumen des Läufers verbunden. Zu ihrer Kühlung ist sie thermisch an kaltes Helium angekoppelt, das der Erregerwicklung über eine entsprechende Versorgungsleitung zugeführt wird. Als Sorptionsmittel werden insbesondere Zeolithe oder Aktivkohle verwendet, die sowohl in loser Form als auch fest an metallische Unterlagen gebunden sein können. Aufgrund der Anordnung der bekannten Kryosorptionspumpe in dem radial weiter außenliegenden Bereich der Erregerwicklung des Läuferkörpers steht nur ein beschränkter Raum für diese Pumpe zur Verfügung, wobei ihre Ausgestaltung verhältnismäßig aufwendig ist. Außerdem läßt sich diese Pumpe nach erfolgtem Zusammenbau des Läufers nicht ohne weiteres wieder demontieren. Ihre Wartung ist dementsprechend erschwert.

Aufgabe der vorliegenden Erfindung ist es, die Kryosorptionspumpe der eingangs genannten Art dahingehend zu verbessern, daß sie einen verhältnismäßig einfachen Aufbau ermöglicht, ohne daß es besonderer Maßnahmen zur Ausgestaltung des die Erregerwicklung tragenden Wickelkörpers des Läufers bedarf.

Diese Aufgabe wird erfindungsgemäß dadurch gelöst, daß die Kryosorptionspumpe in einem zentralen Vakuumraum des Überleitungsteiles längs dessen Rotationsachse angeordnet und dort mit der mindestens einen Kühlmittelzuführungsleitung thermisch verbunden ist.

Es wird also der zentrale Vakuumraum, durch den sich zwangsläufig auch eine Kühlmittelzuführungsleitung erstreckt, zusätzlich zur Aufnahme der Kryosorptionspumpe genutzt. Hierbei können die zu kühlenden Flächen der Sorptionspumpe ohne Schwierigkeit an diese Versorgungsleitung thermisch angekoppelt werden. Die mit dieser Ausgestaltung verbundenen Vorteile sind ins besondere darin zu sehen, daß sich zum einen die Flächen der Kryosorptionspumpe praktisch über die gesamte axiale Länge des Überleitungsteiles erstrecken und somit eine entsprechend ausgedehnte aktive Oberfläche haben können. Zum anderen läßt sich dort die Pumpe verhältnismäßig leicht montieren, so daß sie auch entsprechend einfach zu warten ist.

Vorteilhafte Ausgestaltungen der erfindungsgemäßen Kryosorptionspumpe gehen aus den Unteransprüchen hervor.

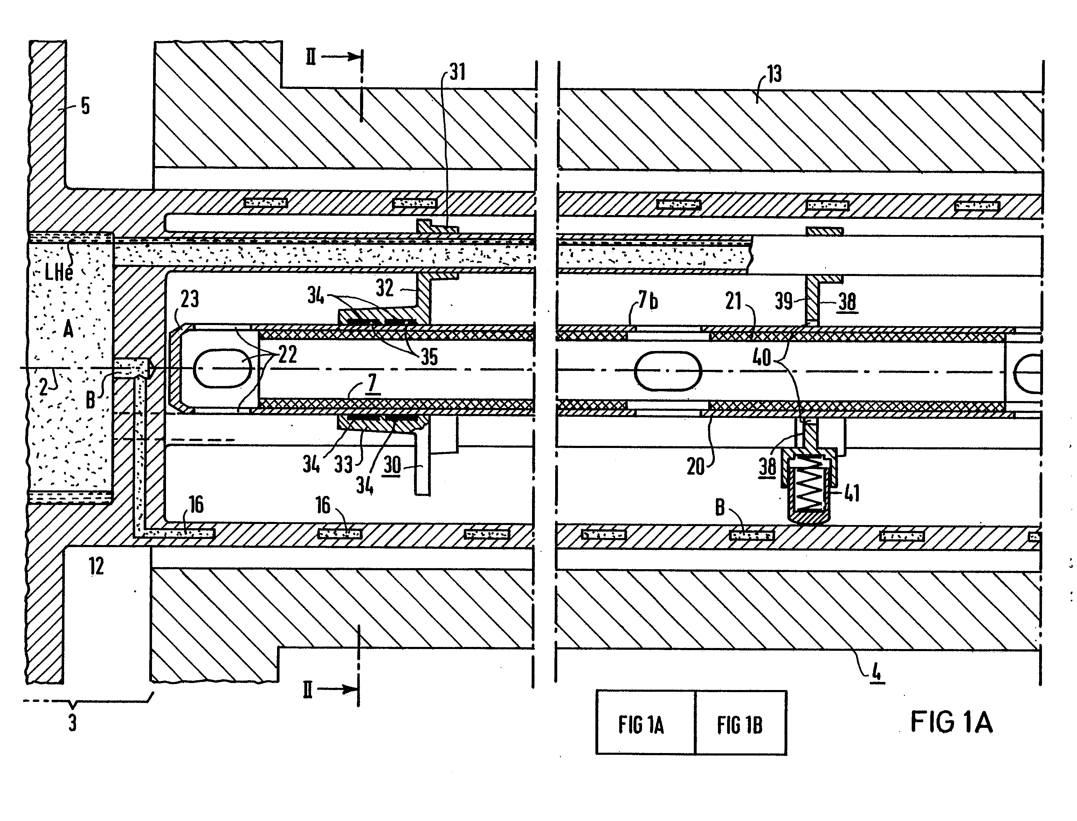

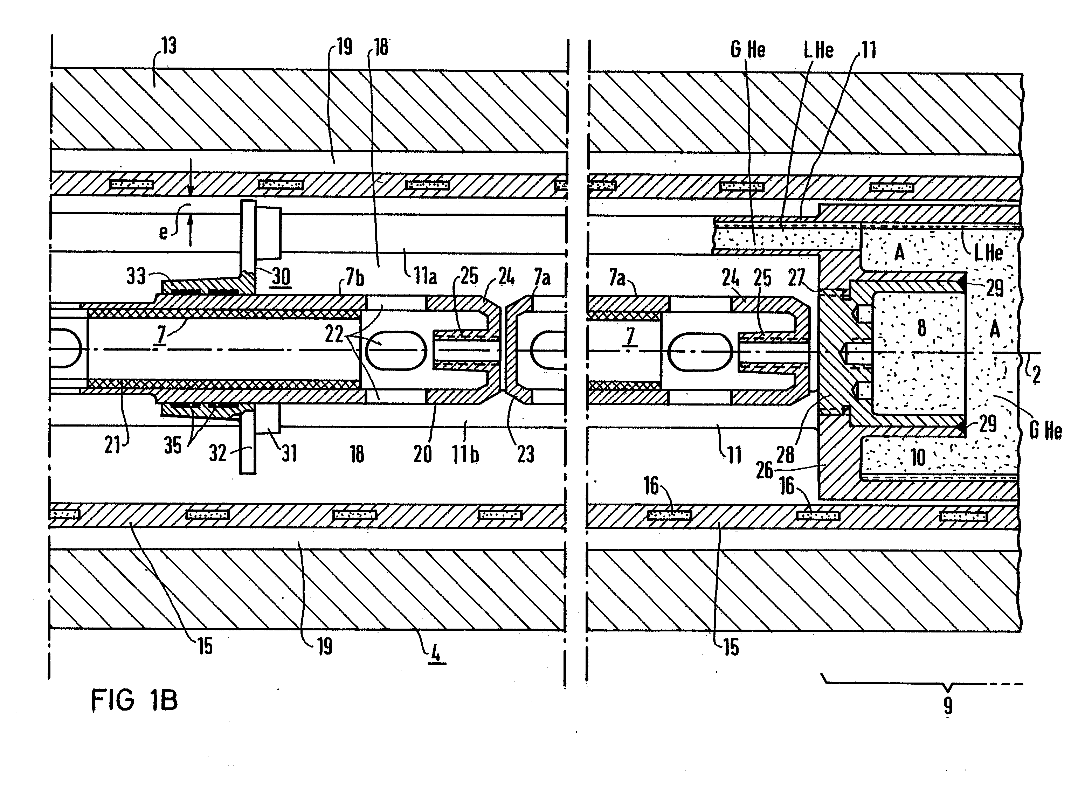

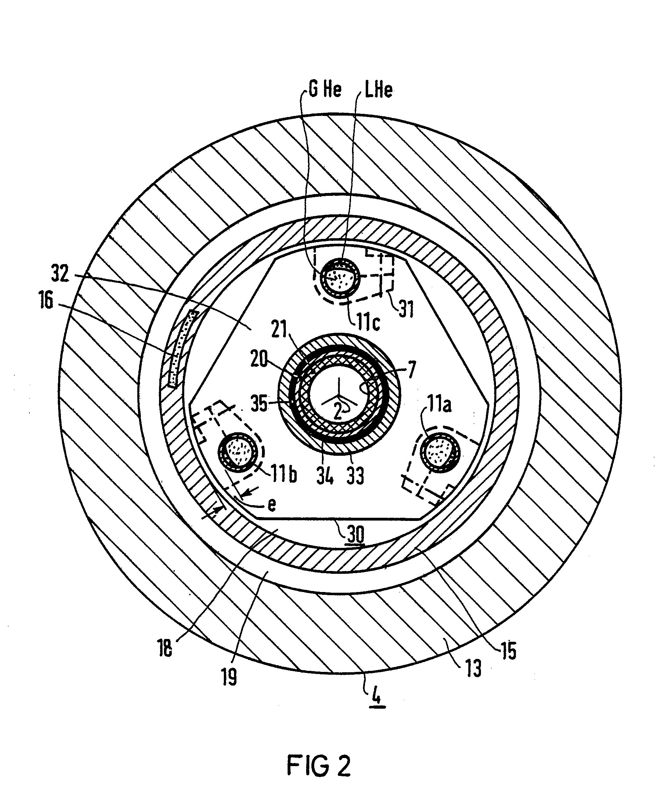

Zur weiteren Erläuterung der Erfindung wird auf die Zeichnung Bezug genommen, in deren Figur 1 ein Längsschnitt durch den Überleitungsteil eines Läufers eines supraleitenden Generators - schematisch veranschaulicht ist. Dabei setzt sich Figur 1 aus zwei Teilfiguren 1A und 1B zusammen. Figur 2 zeigt einen Querschnitt durch diesen Überleitungsteil.

In Kryosorptionspumpen werden Gase aus einem Vakuumbehälter entfernt, indem diese durch Adsorption in nicht viel mehr als einer Monolage an eine gekühlte Fläche gebunden werden. Die Kräfte zwischen einem adsorbierten Molekül und einer noch wenig belegten Kaltfläche sind dabei verhältnismäßig groß, besonders wenn rauhe Oberflächen vorgesehen werden. So beträgt z.B. die Adsorptionsenergie für Helium-Aktivkohle: E ≈ 0,65 kcal/mol. Helium kann also wirksam durch Kryosorption gepumpt werden. Da jedoch die Adsorptionskapazität einer Kaltfläche auf maximal eine Monolage begrenzt ist, lassen sich größere Gasmengen praktisch nur von entsprechend ausgedehnten Oberflächen adsorbieren. Um beispielsweise eine anfallende Gasmenge von etwa $4 \times 10^{-4}$ mbar $\times$ l adsorbieren zu können, wird nämlich eine Fläche von etwa $3,3 \times 10^4$ m² benötigt. Man verwendet deshalb poröse Materialien, die eine spezifische innere Oberfläche von z.B. 500 m²/g haben (vgl. z.B. "J.Vac.Sci.Technol." 2 (1965), Seiten 165 bis 177).

Die am häufigsten verwendeten porösen Sorptionsmittel sind Aktivkohle und sogenannte Molekularsieb-Zeolithe, die in Form von Körnern oder Stäbchen von etwa 2 mm Durchmesser zur Verfügung stehen. Zeolithe sind synthetische Alkali-oder Erdalkalialuminosilikate, die nach Entfernen von Kristallwasser, z.B. durch 24stündiges Ausheizen bei etwa 300°C, definierte Porendurchmesser zwischen 3 Å und 10 Å aufweisen.

Damit Helium wirksam gepumpt wird, muß das Sorptionsmittel auf Temperaturen unter 10 K abgekühlt werden und vor Wärmestrahlung geschützt sein, um eine oberflächliche Aufheizung zu verhindern. Das Sorptionsmittel sollte außerdem nicht mit anderen Gasen wie $H_2$, $O_2$, $N_2$ oder $H_2O$-Dampf vorbelegt sein, da dann die Aufnahmekapazität für Helium stark abnimmt (vgl. z.B. "J.Vac. Sci. Technol." 16 (1979), Seiten 75 bis 78).

Daraus ergeben sich zwei Forderungen:

1. Die Sorptionspumpe muß vor dem Abkühlen regeneriert werden. Zur Regeneration von Aktivkohle genügt in der Regel ein Abpumpen der adsorbierten Gase bei Zimmertemperatur, wozu nach längerem Stehen an Luft 1 bis 2 Tage nötig sind (bei etwa 20 g Aktivkohle). Dagegen kann Zeolith nur durch Aufheizen auf ungefähr 200°C während 24 Stunden unter Vakuum regeneriert werden ("Cryogenics", Vol. 12, 1972, Seiten 201 bis 208).

2. Die Pumpe muß so konstruiert sein, daß zumindest weitgehend nur die Helium-Atome bis zu den kalten Sorptionsflächen vordringen können.

Bei der erfindungsgemäßen Kryosorptionspumpe sind diese Forderungen erfüllt. Sie dient zur Aufrechterhaltung eines thermisch isolierenden Vakuums im Läufer einer elektrischen Maschine, insbesondere eines Turbogenerators, mit supraleitender Erregerwicklung. Der Läufer enthält einen um eine Achse 2 drehbar gelagerten Läuferkörper 3, der in Figur 1 nicht näher veranschaulicht ist, da er allgemein bekannt ist. Ein Ausführungsbeispiel eines solchen Läuferkörpers geht z.B. aus der Veröffentlichung "IEEE Transactions on Magnetics", Vol. MAG-19, No. 3, Mai 1983, Seiten 536 bis 540 hervor. In dem auch als Wicklungsträger bezeichneten Läuferkörper 3 sind die Leiter der in der Figur nicht ausgeführten supraleitenden Erregerwicklung beispielsweise in Nuten angeordnet. Zu ihrer Kühlung dient als kryogenes Kühlmittel flüssiges Helium, das einer externen Kühlmittelversorgungseinrichtung entnommen und über eine Heliumkupplung an einem sogenannten Anschlußkopf in einen Überleitungsteil 4 des Läufers eingeleitet wird. Mit Hilfe einer solchen an sich bekannten Heliumkupplung wird dabei das Kühlmittel zwischen feststehenden und rotierenden Teilen der Maschine überführt. Der in Figur 1 lediglich näher ausgeführte Überleitungsteil 4 stellt dabei ein Wellenendstück des Läufers dar, das sich auf dessen antriebsabgewandter Seite zwischen der entsprechenden Stirnseite 5 des Läuferkörpers 3 und dem in der Figur nicht ausgeführten Anschlußkopf erstreckt. In diesem Überleitungsteil 4 soll sich erfindungsgemäß eine Kryosorptionspumpe 7 befinden.

Das die supraleitende Erregerwicklung kühlende kryogene Kühlmittel A, beispielsweise ein Zweiphasengemisch aus flüssigem Helium LHe und gasförmigem Helium GHe gelangt von einem Helium-Raum 8 in einem dem Anschlußkopf zugewandten Endstück 9 des rohrförmigen Überleitungsteiles 4 über eine ringförmige Sammelrinne 10 in mehrere Kühlmittelzuführungsleitungen 11, die auf einer gedachten Zylindermantelfläche um die Rotationsachse 2 in Umfangsrichtung regelmäßig verteilt angeordnet sind. Von den gemäß dem dargestellten Ausführungsbeispiel angenommenen drei Kühlmittelzuführungsleitungen (11a bis 11c) sind in Figur 1 jedoch lediglich nur zwei dieser Leitungen 11a bzw. 11b ersichtlich. Über diese Leitungen 11 wird das Zweiphasengemisch des Kühlmittels A in eine Kühlmittelkammer 12 im Inneren des Läuferkörpers 3 eingeleitet, von der aus dann das die Erregerwicklung kühlende flüssige Helium entnommen wird. Um eine Wärmeeinleitung in das Kühlmittel A beim Durchlauf durch den Überleitungsteil 4 von dessen auf Raumtemperatur befindlichem Außenrohr 13 her zu begrenzen, sind die Kühlmittelzuführungsleitungen 11 von einem hohlzylindrischen Strahlungsschirm 15 umschlossen. Dieser Strahlungsschirm wird von Kühlmittelabdampf B gekühlt, das dem Läuferkörper 3 z.B. aus der Kühlmittelkammer 12 zentral entnommen ist und über spiralförmige Kühlkanäle 16 in oder an dem Strahlungsschirm 15 dem Anschlußkopf der Maschine zugeführt und somit nach außen abgeführt wird.

Außerdem ist der gesamte von dem Außenrohr 13 des Überleitungsteils 4 umschlossene Innenraum aus thermischen Gründen evakuiert. Dementsprechend sind in dem Überleitungsteil ein innerhalb des Strahlungsschirmes 15 liegender Vakuumraum 18 und ein zwischen dem Strahlungsschirm und dem Außenrohr 13 liegender Vakuumraum 19 ausgebildet. Diese Vakuumräume 18 und 19 sollen an die in dem Läuferkörper 3 befindlichen, insbesondere die supraleitende Erregerwicklung umgebenden Vakuumräume direkt angeschlossen sein.

Innerhalb des zentralen Vakuumraumes 18, durch den sich die Kühlmittelzuführungsleitungen 11a bis 11c jeweils in geringer Entfernung e von dem Strahlungsschirm 15 hindurch erstrecken, ist längs der Rotationsachse 2 praktisch über die gesamte axiale Länge des Überleitungsteils 4 die Kryosorptionspumpe 7 angeordnet. Diese Pumpe kann aus Gründen einer leichteren Montage in mehrere Elemente unterteilt sein, von denen lediglich das dem Läuferkörper 3 zugewandte Element 7a und das dem Anschlußkopf zugewandte Element 7b als Teilstücke veranschaulicht sind. Diese auch als Patronen bezeichneten Elemente weisen jeweils ein rohrförmiges Außenteil aus thermisch gut leitendem Metall wie z.B. Kupfer auf. Jedes dieser Metallrohre 20 ist auf seiner Innenseite mit einer Lage eines Sorptionsmittels 21 wie z.B. aus Aktivkohle beschichtet. Zur Befestigung einer etwa 1 bis 2 mm dicken Aktivkohle-Schicht direkt auf dem Metall der Rohre 20 können z.B. Zweikomponentenkleber oder ein Sn-Ag-Lot verwendet werden. Zeolith kann auch in Pulverform und mit einem Bindemittel versetzt quasi als Schlamm auf die aufgerauhten Metallflächen gebracht und anschließend getrocknet werden; oder er wird mit einer hitzebeständigen Mischung aus Wasserglas und Talk aufgeklebt. Die Beschichtung der Innenseite ist zweckmäßig, damit sich das Sorptionsmittel 21 durch die Fliehkraft nicht ablöst. Außerdem sollen die beschichteten Metallrohre 20 Öffnungen bzw. Löcher 22 besitzen, um so einen Gaseintritt zu erleichtern. Um eine direkte Wärmeeinstrahlung auf das Sorptionsmittel 21 durch diese Löcher 22 hindurch zu verhindern, reicht das Sorptionsmittel nicht unmittelbar bis an die Ränder der Löcher heran.

Die Elemente 7a und 7b der Pumpe 7 können ferner jeweils an ihren stirnseitigen Enden Stirnwände 23 und 24 aufweisen, wobei zweckmäßig die dem Anschlußkopf zugewandte Stirnwand 24 mit einem Gewindeteil 25 versehen ist. Es ist somit möglich, mit einer ein entsprechendes Gewinde aufweisenden Montagestange die einzelnen Elemente von der Anschlußkopfseite her in den Überleitungsteil 4 hineinzuschieben oder aus diesem auch wieder herauszuziehen. Hierzu ist die der Pumpe zugewandte Stirnwand 26 des Endstücks 9 mit einer entsprechenden Montageöffnung 27 versehen, durch welche die einzelnen Elemente der Pumpe hindurchgeführt werden können. Diese Montageöffnung ist durch ein entsprechend angepaßtes Teil 28 zu verschließen, wobei dieses Verschlußteil aus Gründen der Helium-Dichtigkeit auf seiner dem Helium-Raum 8 zugewandten Seite zu verschweißen ist. Eine entsprechende ringförmige Schweißnaht ist in der Figur mit 29 bezeichnet.

Zur Kühlung der einzelnen Elemente 7a, 7b bzw. ihrer Sorptionsmittelschichten 21 sind diese Elemente mit den flüssiges Helium LHe führenden Kühlmittelzuführungsleitungen 11 thermisch gut leitend, jedoch mechanisch lösbar verbunden. Hierzu sind an den Kühlmittelzuführungsleitungen 11 besondere Halterungen 30 befestigt, beispielsweise mittels schellen-oder keulenartiger Fortsätze 31 angeklemmt. Diese Halterungen weisen jeweils eine sich im wesentlichen radial erstreckende Halteplatte 32 auf, die an ihrer dem jeweiligen Pumpenelement zugewandten Seite in ein rohrförmiges Fußteil 33 übergeht. Dieses Fußteil mit geringfügig größerem Innendurchmesser als das zugeordnete Pumpenelement ist auf seiner diesem Element zugewandten Innenseite mit ringförmigen Nuten 34 versehen, in welche an sich bekannte Federbänder 35 einzulegen sind. Gegebenenfalls können die Nuten zur Aufnahme der Federbänder 35 auch in die Außenseiten der Metallrohre 20 eingearbeitet sein. Über diese Federbänder erfolgt der thermische Kontakt zwischen dem Metallrohr 20 des jeweiligen Pumpenelementes und der zugehörigen Halterung 30, die eine thermisch gut-leitende Verbindung zu den kalten Kühlmittelzuführungsleitungen 11 darstellt. Aufgrund der Verwendung von Federbändern ist somit trotz des erwünschten guten thermischen Kontaktes zwischen den Teilen 20 und 30 eine Verschiebung der einzelnen Elemente der Sorptionspumpe 7 längs der Rotationsachse 2 ermöglicht.

Wie in Figur 1 ferner angedeutet ist, sind zur Verbesserung der mechanischen Stabilität des Aufbaus innerhalb des Überleitungsteiles 4 beispielsweise zwischen jeweils zwei Halterungen 30 noch besondere Stützvorrichtungen 38 vorgesehen. Diese aus thermisch schlecht leitendem Material bestehenden Vorrichtungen sind wie die Halterungen 30 an den Kühlmittelzuführungsleitungen 11 befestigt und weisen jeweils eine sich radial erstreckende Stützplatte 39 auf, die mit einer hinreichend großen zentralen Öffnung 40 ausgestattet ist, so daß das jeweilige Pumpenelement ohne weiteres durch sie hindurchgeschoben werden kann. Die Vorrichtungen 38 stützten sich dabei über mehrere an ihrem Außenrand in Umfangsrichtung regelmäßig verteilte, elastische Zwischenstücke 41 wie z.B. über Federbolzen an der Innenseite des Strahlungsschirmes 15 ab.

In Figur 2 ist schematisch eine Ansicht auf einen Querschnitt durch den Überleitungsteil 4 nach Figur 1 veranschaulicht, wobei dieser Querschnitt längs einer dort mit II-II bezeichneten Schnittebene gelegt ist. Dabei sind in den Figuren übereinstimmende Teile mit den gleichen Bezugszeichen versehen. Aus dieser Figur geht insbesondere die in Umfangsrichtung regelmäßig verteilte Lage der einzelnen Kühlmittelzuführungsleitungen 11a bis 11c sowie die Gestaltungsform der radialen Halteplatte 32 der Halterung 30 deutlich hervor.

Gemäß dem in den Figuren dargestellten Ausführungsbeispiel einer erfindungsgemäßen Kryosorptionspumpe wurde davon ausgegangen, daß die kalten Kühlmittelzuführungsleitungen 11 bzw. 11a bis 11c außerhalb der Pumpe 7 verlaufen. Gegebenenfalls ist jedoch auch die Anordnung einer oder mehrerer solcher Versorgungsleitungen innerhalb der Pumpe möglich. Statt einzelner Leitungen kann gegebenenfalls auch mindestens ein Kanal mit ringförmigem Querschnitt vorgesehen werden.

Außerdem kann man, abweichend von dem dargestellten Ausführungsbeispiel, auch die Kryosorptionspumpe aus einzelnen Elementen zusammensetzen, die unterschiedliche Durchmesser aufweisen. Verwendet man nämlich, in Richtung von dem Läuferkörper 3 auf den Anschlußkopf gesehen, Elemente mit stufenförmig größerwerdenden Durchmessern, wobei die Abmessungen der Halterungen 30 und Stützvorrichtungen 38 entsprechend anzupassen sind, so wird dadurch eine Montage der einzelnen Elemente von der Seite des Anschlußkopfes her erleichtert.

**Ansprüche**

1. Kryosorptionspumpe für ein thermisches Isoliervakuum im Läufer einer elektrischen Maschine, insbesondere eines Turbogenerators, wobei der Läufer
-eine supraleitende, von einem kryogenen Kühlmittel tiefzukühlende Erregerwicklung aufweist, der das Kühlmittel über mindestens eine entsprechende Leitung zuzuführen ist,
-an einer Seite mit einem mitrotierenden Überleitungsteil für vakuumisolierte Kühlmittelleitungen versehen ist
und
-dessen zu evakuierenden Räume mit der Kryosorptionspumpe direkt verbunden sind, welche an die Kühlmittelzuführungsleitung thermisch angekoppelt ist,
**dadurch gekennzeichnet,** daß die Kryosorptionspumpe ( 7; 7a, 7b) in einem zentralen Vakuumraum (18) des Überleitungsteiles (4) längs dessen Rotationsachse (2) angeordnet und dort mit der mindestens einen Kühlmittelzuführungsleitung (11; 11a bis 11c) thermisch verbunden ist.

2. Kryosorptionspumpe nach Anspruch 1, **dadurch gekennzeichnet**, daß die Pumpe (7) aus mehreren hintereinandergereihten Einzelelementen (7a, 7b) zusammengesetzt ist.

3. Kryosorptionspumpe nach Anspruch 2, **dadurch gekennzeichnet**, daß die Elemente (7a, 7b) der Pumpe (7) aus Rohrstücken (Metallrohre 20) aus thermisch gut leitendem Material bestehen, die jeweils an ihrer Innenseite mit einem Kryosorptionsmittel (21) belegt sind.

4. Kryosorptionspumpe nach Anspruch 3, **dadurch gekennzeichnet**, daß die mit dem Sorptionsmittel (21) belegten Rohrstücke (Metallrohre 20) mit Löchern (22) oder sonstigen Öffnungen versehen sind.

5. Kryosorptionspumpe nach einem der Ansprüche 2 bis 4, **dadurch gekennzeichnet**, daß jedes Einzelelement (7a, 7b) der Pumpe (7) in mindestens zwei Halterungen (30) axial verschiebbar geführt ist, wobei die Halterungen (30) einen guten Wärmekontakt zwischen dem Element (7a, 7b) und der Kühlmittelzuführungsleitung (11) gewährleisten.

6. Kryosorptionspumpe nach Anspruch 5, **dadurch gekennzeichnet**, daß das Spiel der Führung jedes Einzelelementes (7a, 7b) der Pumpe (7) bezüglich der Halterungen (30) mit mindestens einem Federband (35) überbrückt ist, das in die Halterung (30) oder in das Einzelelement (7a, 7b) eingefügt ist.

7. Kryosorptionspumpe nach Anspruch 5 oder 6, **dadurch gekennzeichnet**, daß die Pumpe (7) von mindestens drei rohrförmigen Kühlmittelzuführungsleitungen (11a bis 11c) umgeben ist und diese Leitungen über die Halterungen (30) mit der Pumpe (7) mechanisch und thermisch verbunden sind.

8. Kryosorptionspumpe nach einem der Ansprüche 2 bis 7, **dadurch gekennzeichnet**, daß die Einzelelemente (7a, 7b) der Pumpe (7) verschiedene Außendurchmesser haben.

9. Kryosorptionspumpe nach einem der Ansprüche 2 bis 8, **dadurch gekennzeichnet**, daß die Einzelelemente (7a, 7b) der Pumpe (7) an ihren einem Anschlußkopf der Maschine zugewandten Stirnseiten (24) jeweils ein Gewindeteil (25) zum Einschrauben einer Montagestange aufweisen.

10. Kryosorptionspumpe nach einem der Ansprüche 1 bis 9, **dadurch gekennzeichnet**, daß der Überleitungsteil (4) des Läufers in seinem einem Anschlußkopf der Maschine zugewandten Endstück (9) eine radiale Stirnwand (26) aufweist, die mit einer verschließbaren Öffnung (27) zur Montage der Pumpe (7) innerhalb des Überleitungsteiles (4) versehen ist.

11. Kryosorptionspumpe nach einem der Ansprüche 1 bis 10, **dadurch gekennzeichnet**, daß ein zylindrischer Strahlungsschirm (15) um die mindestens eine Kühlmittelzuführungsleitung (11) und die Pumpe (7) angeordnet ist und dieser mit einer Kühlmittelabdampfleitung (Kühlkanäle 16) thermisch verbunden ist.

12. Kryosorptionspumpe nach Anspruch 11, **dadurch gekennzeichnet**, daß die mindestens eine Kühlmittelzuführungsleitung (11) und/oder die Pumpe (7) über eine thermisch schlecht-leitende Stützvorrichtung (38) in dem Strahlungsschirm (15) elastisch gelagert sind.

13. Kryosorptionspumpe nach Anspruch 12, **dadurch gekennzeichnet**, daß die Stützvorrichtungen (38) mehrere radial verlaufende Federbolzen (elastische Zwischenstücke 41) aufweisen.

14. Kryosorptionspumpe nach Anspruch 13, **dadurch gekennzeichnet**, daß die Federbolzen (elastische Zwischenstücke 41) aus einem Material mit großem Wärmewiderstand bestehen.

15. Kryosorptionspumpe nach einem der Ansprüche 5 bis 7 und einem der Ansprüche 12 bis 14, **dadurch gekennzeichnet**, daß zumindest einige der Halterungen (30) und der Stützvorrichtungen (38) axial in wechselnder Folge angeordnet sind.

5

LHe

A

2

B

12

3

II

31

23

34 32

22

35

7

34 33 30

34

16 16

II

13

7 b 21 39 38

40

20 38

41

B

4

0 238 908

| FIG 1A | FIG 1B |

FIG 1A

FIG 1B

FIG 2

0 238 908

**Europäisches Patentamt**

# EUROPÄISCHER RECHERCHENBERICHT

Nummer der Anmeldung

EP 87 10 3179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | FR-A-2 415 212  (BBC)<br>* Seite 2, Zeilen 7-16; Seite 3, Zeilen 19-21; Seite 4, Zeilen 6-12; Patentanspruch 4; Figur 1 *<br>--- | 1 | H 02 K  55/04<br>F 04 B  37/02 |
| D,Y | FR-A-2 428 936  (SIEMENS)<br>* Seite 3, Zeilen 17-19; Seite 4, Zeile 14 - Seite 5, Zeile 3; Figur 1 *<br>--- | 1 | |
| A | EP-A-0 144 522  (SIEMENS)<br>* Seite 3, Zeilen 22-29; Figur 1 * | 2 | |
| | ----- | | |

| RECHERCHIERTE SACHGEBIETE (Int. Cl.4) |
|---|
| H 02 K  55/00<br>F 04 B  37/00 |

Der vorliegende Recherchenbericht wurde für alle Patentansprüche erstellt.

| Recherchenort | Abschlußdatum der Recherche | Prüfer |
|---|---|---|
| DEN HAAG | 25-06-1987 | LE GUAY P.A. |